# EUROPÄISCHE PATENTANMELDUNG

(11) **EP 3 185 607 A1**
(43) Veröffentlichungstag der Anmeldung: **28.06.2017**
(21) Anmeldenummer: 15202554.0
(22) Anmeldetag: 23.12.2015
(51) Int. Cl.: H04W 24/02, H04L 12/24, H04W 88/10

(54) **VORRICHTUNGEN UND VERFAHREN ZUM BETREIBEN EINES KOMMUNIKATIONSNETZWERKES**

(71) Anmelder: Deutsche Telekom AG, 53113 Bonn (DE)
(72) Erfinder: Breitbach, Markus, 53227 Bonn (DE)
(74) Vertreter: Patentship Patentanwaltsgesellschaft mbH

(57) **Zusammenfassung**

Die Erfindung betrifft ein Verfahren (100) zum Betreiben eines Kommunikationsnetzwerkes (200) mit einer Basisstation (201), wobei das Verfahren umfasst: Zuordnen (101) der Basisstation (201) zu einem ersten Subnetzwerk (213) des Kommunikationsnetzwerkes (200) und Betreiben des ersten Subnetzwerkes (213) des Kommunikationsnetzwerkes (200) mittels einer Managemententität (211), wobei die Basisstation (201) ausgebildet ist, im Betrieb des ersten Subnetzwerkes (213) mit einem ersten Satz von Kommunikationsendgeräten (203a) zu kommunizieren; und Zuordnen (103) der Basisstation (201) zu einem zweiten Subnetzwerk (215) des Kommunikationsnetzwerkes (200) und Betreiben des zweiten Subnetzwerkes (215) des Kommunikationsnetzwerkes (200) mittels der Managemententität (211), wobei die Basisstation (201) ausgebildet ist, im Betrieb des zweiten Subnetzwerkes (215) mit einem zweiten Satz von Kommunikationsendgeräten (203b) zu kommunizieren.

## Beschreibung

Die Erfindung betrifft Vorrichtungen und Verfahren zum Betreiben eines Kommunikationsnetzwerkes mit wenigstens einer Basisstation, insbesondere wenigstens einer WLAN-Basisstation.

Informations- und Kommunikationstechnologien sind heutzutage im Lebensalltag von Privathaushalten nicht mehr wegzudenken. Aktivitäten wie das Kommunizieren, die Informationssuche, das Einkaufen oder Bestellen von Waren über das Internet sind für viele Menschen selbstverständlich geworden. Häufig erfolgt dabei der Zugang zum Internet beispielsweise über ein Home-Gateway oder ein vergleichbares Gerät, das als Schnittstelle für alle innerhalb des Privathaushalts vorhandenen Netze und Bussysteme dient. Zur drahtlosen Kommunikation insbesondere mit den in einem Privathaushalt vorhandenen mobilen Kommunikationsendgeräten umfasst ein solches Home-Gateway eine WLAN-Basisstation (auch als WLAN Access Point bezeichnet) oder ist mit einer solchen verbunden.

Eine weitere häufig genutzte Möglichkeit, auf das Internet zuzugreifen, stellen die sogenannten "WiFi-Hotspots" dar, bei denen es sich in der Regel um öffentliche drahtlose WiFi-Basisstationen handelt, die (gegebenenfalls gegen Bezahlung) für jedermann zugänglich sind. WiFi-Hotspots sind sowohl in öffentlichen Räumen (Bibliotheken, Krankenhäusern, Flughäfen, Bahnhöfen usw.) als auch in privaten, z. B. Restaurants, Cafes, Hotels etc. installiert.

Es ist absehbar, dass in der nahen Zukunft die Zahl der über ein Mobilfunknetz und/oder ein WiFi-Netz kommunikationsfähigen (mobilen) Endgeräte rasant zunehmen wird, wobei es sich bei den Kommunikationsendgeräten neben "klassischen" Mobiltelefonen auch um "intelligente" Vorrichtungen wie Sensoren, Kameras, Verkehrsinfrastruktur und ähnlichen Vorrichtungen handeln wird, welche Teil des "Internet of Things" sein werden. Das Handling des damit verbundenen Kommunikationsaufkommens stellt eine enorme Herausforderung für bestehende Mobilfunknetzinfrastrukturen dar.

Vor diesem Hintergrund ist es die Aufgabe der vorliegenden Erfindung, verbesserte Vorrichtungen und Verfahren zum Betreiben eines Kommunikationsnetzwerkes bereitzustellen.

Diese Aufgabe wird durch die Merkmale der unabhängigen Ansprüche gelöst. Vorteilhafte Weiterbildungsformen sind Gegenstand der abhängigen Ansprüche.

Gemäß einem ersten Aspekt betrifft die Erfindung ein Verfahren zum Betreiben eines Kommunikationsnetzwerkes mit einer Basisstation. Dabei umfasst das Verfahren das Zuordnen der Basisstation zu einem ersten logischen Subnetzwerk des Kommunikationsnetzwerkes und das Betreiben des ersten Subnetzwerkes des Kommunikationsnetzwerkes mittels einer Managemententität, wobei die Basisstation ausgebildet ist, im Betrieb des ersten Subnetzwerkes mit einem ersten Satz von Kommunikationsendgeräten zu kommunizieren, sowie das Zuordnen der Basisstation zu einem zweiten logischen Subnetzwerk des Kommunikationsnetzwerkes und das Betreiben des zweiten Subnetzwerkes des Kommunikationsnetzwerkes mittels der Managemententität, wobei die Basisstation ausgebildet ist, im Betrieb des zweiten Subnetzwerkes mit einem zweiten Satz von Kommunikationsendgeräten zu kommunizieren.

In einer Ausführungsform des Verfahrens gemäß dem ersten Aspekt der Erfindung ist die Basisstation als WLAN-Basisstation, insbesondere WiFi-Basisstation, ausgebildet.

In einer Ausführungsform handelt es sich bei dem ersten logischen Subnetzwerk und dem zweiten logischen Subnetzwerk um Slices des Kommunikationsnetzwerkes. Der Begriff "Netzwerk-Slice" bzw. "Netzwerk-Slicing" beschreibt ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt ein Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten.

In einer Ausführungsform des Verfahrens gemäß dem ersten Aspekt der Erfindung wird zu einem Zeitpunkt entweder das erste Subnetzwerk oder das zweite Subnetzwerk des Kommunikationsnetzwerkes betrieben, d.h. bei dieser Ausführungsform ist die Basisstation entweder Teil des ersten logischen Subnetzwerkes oder Teil des zweiten logischen Subnetzwerkes des Kommunikationsnetzwerkes.

In einer Ausführungsform des Verfahrens gemäß dem ersten Aspekt der Erfindung umfasst das Verfahren ferner den Schritt des Umschaltens vom Betrieb des ersten Subnetzwerkes des Kommunikationsnetzwerkes auf den Betrieb des zweiten Subnetzwerks des Kommunikationsnetzwerkes, wobei der Schritt des Umschaltens mittels der Managemententität durchgeführt wird.

In einer Ausführungsform des Verfahrens gemäß dem ersten Aspekt der Erfindung können das erste Subnetzwerk und das zweite Subnetzwerk des Kommunikationsnetzwerkes parallel betrieben werden, d.h. bei dieser Ausführungsform ist die Basisstation gleichzeitig sowohl Teil des ersten logischen Subnetzwerkes als auch Teil des zweiten logischen Subnetzwerkes des Kommunikationsnetzwerkes.

In einer Ausführungsform des Verfahrens gemäß dem ersten Aspekt der Erfindung umfasst das Kommunikationsnetzwerk ein Zugangsnetzwerk, das im Betrieb des ersten Subnetzwerkes dem ersten Satz von Kommunikationsendgeräten den Zugang zum Internet ermöglicht und im Betrieb des zweiten Subnetzwerkes dem zweiten Satz von Kommunikationsendgräten den Zugang zum Internet ermöglicht.

In einer Ausführungsform verwendet die Basisstation im Betrieb des ersten Subnetzwerkes des Kommunikationsnetzwerkes einen ersten Drahtlosnetzwerkstandard zur Kommunikation mit dem ersten Satz von Kommunikationsendgeräten und im Betrieb des zweiten Subnetzwerkes des Kommunikationsnetzwerkes einen zweiten Drahtlosnetzwerkstandard zur Kommunikation mit dem zweiten Satz von Kommunikationsendgeräten.

In einer Ausführungsform des Verfahrens gemäß dem ersten Aspekt der Erfindung weist im Betrieb des ersten Subnetzwerkes des Kommunikationsnetzwerkes die Basisstation eine andere Abstrahlcharakteristik als im Betrieb des zweiten Subnetzwerkes des Kommunikationsnetzwerkes auf.

In einer Ausführungsform des Verfahrens gemäß dem ersten Aspekt der Erfindung weist im Betrieb des ersten Subnetzwerkes des Kommunikationsnetzwerkes die Basisstation eine andere Downlink-Datenkapazität oder Uplink-Datenkapazität als im Betrieb des zweiten Subnetzwerkes des Kommunikationsnetzwerkes auf.

In einer Ausführungsform des Verfahrens gemäß dem ersten Aspekt der Erfindung hat im Betrieb des zweiten Subnetzwerkes des Kommunikationsnetzwerkes die Basisstation Zugriff auf eine Datenbank, die dem zweiten Subnetzwerk zugeordnet ist, wobei in der Datenbank Identifikations-, Adress- oder Zugangsinformationen, insbesondere eine IMSI, IMEI, eID oder eUICC, wenigstens eines Kommunikationsendgeräts des zweiten Satzes von Kommunikationsendgeräten hinterlegt sind.

In einer Ausführungsform des Verfahrens gemäß dem ersten Aspekt der Erfindung ist im Betrieb des ersten Subnetzwerkes die Basisstation durch einen ersten Zugangsschlüssel gesichert und im Betrieb des zweiten Subnetzwerkes die Basisstation durch einen zweiten Zugangsschlüssel gesichert.

Gemäß einem zweiten Aspekt betrifft die Erfindung eine Basisstation, die dazu ausgebildet ist, das Verfahren gemäß dem ersten Aspekt der Erfindung durchzuführen, d.h. eine Basisstation für ein Kommunikationsnetzwerk, wobei die Basisstation ausgebildet ist, einem ersten Subnetzwerk des Kommunikationsnetzwerkes oder einem zweiten Subnetzwerk des Kommunikationsnetzwerkes zugeordnet zu werden, wobei die Basisstation ausgebildet ist, im Betrieb des ersten Subnetzwerkes mit einem ersten Satz von Kommunikationsendgeräten zu kommunizieren und im Betrieb des zweiten Subnetzwerkes mit einem zweiten Satz von Kommunikationsendgeräten zu kommunizieren.

Gemäß einem dritten Aspekt betrifft die Erfindung eine Managemententität, die dazu ausgebildet ist, das Verfahren gemäß dem ersten Aspekt der Erfindung durchzuführen, d.h. eine Managemententität zum Betreiben eines Kommunikationsnetzwerkes mit einer Basisstation, wobei die Managemententität ausgebildet ist, die Basisstation einem ersten Subnetzwerk des Kommunikationsnetzwerkes zuzuordnen und das erste Subnetzwerk des Kommunikationsnetzwerkes zu betreiben, wobei die Basisstation ausgebildet ist, im Betrieb des ersten Subnetzwerkes mit einem ersten Satz von Kommunikationsendgeräten zu kommunizieren, und wobei die Managemententität ausgebildet ist, die Basisstation einem zweiten Subnetzwerk des Kommunikationsnetzwerkes zuzuordnen und das zweite Subnetzwerk des Kommunikationsnetzwerkes zu betreiben, wobei die Basisstation ausgebildet ist, im Betrieb des zweiten Subnetzwerkes mit einem zweiten Satz von Kommunikationsendgeräten zu kommunizieren.

Weitere Ausführungsbeispiele werden Bezug nehmend auf die beiliegenden Zeichnungen erläutert. Es zeigen:
- Fig. 1: eine schematische Darstellung eines Verfahrens zum Betreiben eines Kommunikationsnetzwerks mit einer Basisstation gemäß einer Ausführungsform; und
- Fig. 2: eine schematische Darstellung eines Kommunikationsnetzwerks, in dem ein Verfahren zum Betreiben eines Kommunikationsnetzwerks mit einer Basisstation gemäß einer Ausführungsform implementiert ist.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

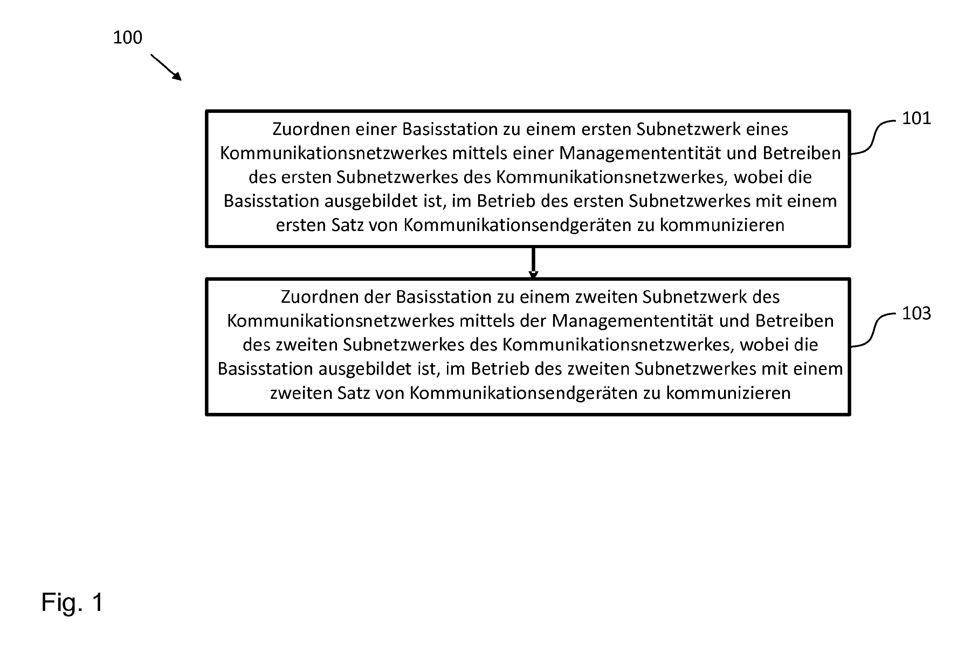

Figur 1 zeigt eine schematische Darstellung eines Verfahrens 100 zum Betreiben eines Kommunikationsnetzwerks mit einer Basisstation gemäß einer Ausführungsform. Das Verfahren umfasst das Zuordnen 101 der Basisstation zu einem ersten logischen Subnetzwerk des Kommunikationsnetzwerkes und das Betreiben des ersten logischen Subnetzwerkes des Kommunikationsnetzwerkes mittels einer Managemententität, wobei die Basisstation ausgebildet ist, im Betrieb des ersten logischen Subnetzwerkes mit einem ersten Satz von Kommunikationsendgeräten zu kommunizieren. Das Verfahren umfasst ferner das Zuordnen 103 der Basisstation zu einem zweiten logischen Subnetzwerk des Kommunikationsnetzwerkes und das Betreiben des zweiten logischen Subnetzwerkes des Kommunikationsnetzwerkes mittels der Managemententität, wobei die Basisstation ausgebildet ist, im Betrieb des zweiten logischen Subnetzwerkes mit einem zweiten Satz von Kommunikationsendgeräten zu kommunizieren.

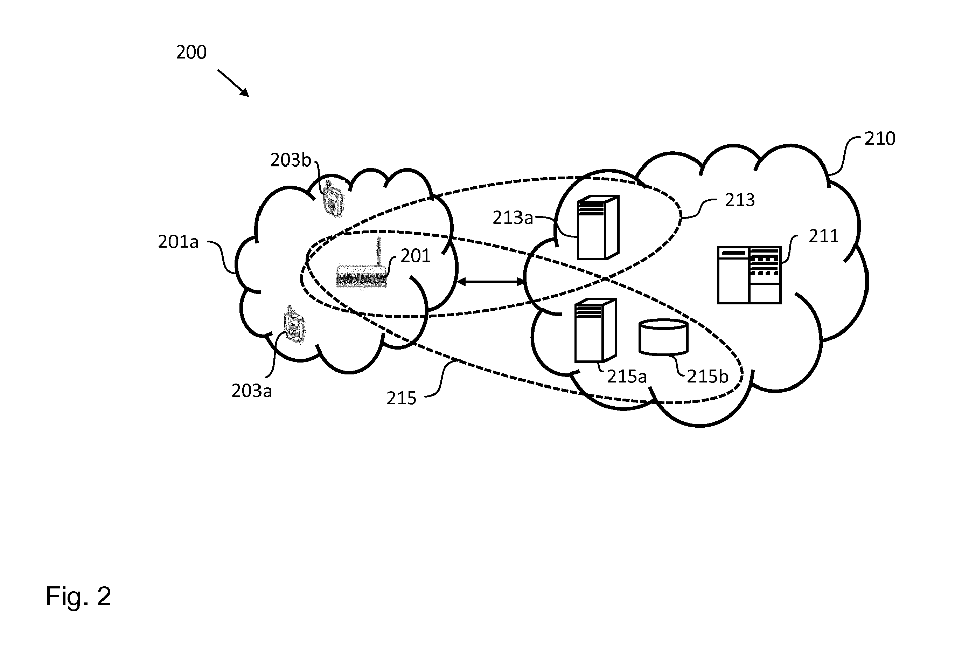

Das in Figur 1 schematisch dargestellte Verfahren sowie weitere Ausführungsformen davon werden nachstehend unter Bezugnahme auf die Figur 2 beschrieben, die eine Ausführungsform eines Kommunikationsnetzwerkes 200 zeigt, in dem das Verfahren 100 zum Betreiben eines Kommunikationsnetzwerks mit einer Basisstation gemäß einer Ausführungsform implementiert werden kann.

Das in der Figur 2 dargestellte Kommunikationsnetzwerk 200 umfasst ein von einer Basisstation 201 ausgebildetes Drahtlosnetzwerk 201 a sowie ein Zugangsnetzwerk 210, das der Basisstation 201 beispielsweise den Zugang zum Internet ermöglicht. Bei der Basisstation 201 kann es sich beispielsweise um ein Home-Gateway handeln, also um die Basisstation eines Privathaushalts. Alternativ kann die Basisstation 201 Teil eines WiFi-Hotspots sein. Die Basisstation kann beispielsweise über eine DSL-Verbindung, KabelVerbindung, Glasfaser-Verbindung oder dergleichen mit dem Zugangsnetzwerk 210 verbunden sein. Die Basisstation 201 kann beispielsweise dazu ausgebildet sein, ein WiFi-Drahtlosnetzwerk, ein ZigBee-Drahtlosnetzwerk und/oder ein Drahtlosnetzwerk auf der Grundlage eines anderen Drahtlosnetzwerkstandards auszubilden.

In einem Default-Modus ist die Basisstation 201 einem ersten logischen Subnetzwerk 213 des Kommunikationsnetzwerkes 200 zugeordnet und ausgebildet, im Betrieb des ersten logischen Subnetzwerkes 213 mit einem ersten Satz von Kommunikationsendgeräten zu kommunizieren, der in der Figur 2 durch das Kommunikationsendgerät 203a repräsentiert wird, d.h. im Betrieb des ersten logischen Subnetzwerkes 213 ermöglicht die Basisstation 201 als Teil des ersten logischen Subnetzwerkes 213 dem Kommunikationsendgerät 203a über das Zugangsnetzwerk 210 auf das Internet zuzugreifen.

Gemäß einer Ausführungsform handelt es sich bei dem ersten logischen Subnetzwerk 213 um eine erste Slice 213 des Kommunikationsnetzwerkes 200. Der Begriff "Netzwerk-Slice" bzw. "Netzwerk-Slicing" betrifft ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt eine Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

Die erste Netzwerk-Slice 213 kann beispielsweise auf einem Server 213a des Zugangsnetzwerks 210 instanziiert sein und von einer Managemententität 211 in Form eines SDN-Controllers verwaltet werden.

Für den Fall, dass der Benutzer/Besitzer der Basisstation 201 zeitweise keinen Bedarf für die Verwendung des Basisstation 201 hat, d.h. mit seinen Kommunikationsendgeräten, beispielsweise dem Kommunikationsendgerät 203a, nicht auf das Internet zugreifen muss, ist erfindungsgemäß vorgesehen, dass beispielsweise auf Veranlassung der Managemententität 211 in Form des SDN-Controllers die Basisstation 201 einem zweiten logischen Subnetzwerk 215 des Kommunikationsnetzwerkes 200 zugeordnet wird. Beim Betreiben des zweiten logischen Subnetzwerkes 215 des Kommunikationsnetzwerkes 200 ist die Basisstation 201 ausgebildet, mit einem zweiten Satz von Kommunikationsendgeräten zu kommunizieren, der in der Figur 2 durch das Kommunikationsendgerät 203b repräsentiert wird.

Gemäß einer Ausführungsform handelt es sich bei dem zweiten logischen Subnetzwerk 215 um eine zweite Netzwerk-Slice 215 des Kommunikationsnetzwerkes 200. Die zweite Netzwerk-Slice 215 kann beispielsweise auf einem weiteren Server 215a des Zugangsnetzwerks 210 instanziiert sein und ebenso von der Managemententität 211 in Form eines SDN-Controllers verwaltet werden.

Mit anderen Worten: als Teil der zweiten Netzwerk-Slice 215 ist die Basisstation 201 nunmehr dazu ausgebildet, mit weiteren Kommunikationsendgeräten (d.h. dem zweiten Satz von Kommunikationsendgeräten 203b) zu kommunizieren, die sich im Kommunikationsbereichs des Drahtlosnetzwerkes 201a der Basisstation 201 befinden, z.B. mit M2M-Kommunikationsendgeräten in Form von Sensoren, Kameras, Verkehrsinfrastruktur und dergleichen. Hierbei kann es sich um beliebige Kommunikationsendgeräte handeln, insbesondere um Kommunikationsendgeräte, die nicht über ein vom Anwender/Besitzer der Basisstation 201 vergebenes Passwort verfügen, das im Betrieb der Basisstation 201 als Teil der ersten Netzwerk-Slice 213 den Zugriff darauf und damit über das Zugangsnetzwerk 210 auf das Internet ermöglicht.

Wie vorstehend beschrieben, wird gemäß einer Ausführungsform die Basisstation 201 zu einem Zeitpunkt entweder als Teil der ersten Netzwerk-Slice 213 oder als Teil der zweiten Netzwerk-Slice 215 des Kommunikationsnetzwerkes 200 betrieben. Gemäß einer weiteren Ausführungsform können die erste Netzwerk-Slice 213 und die zweite Netzwerk-Slice 215 des Kommunikationsnetzwerkes 200 auch parallel auf der Basisstation 201 betrieben werden. Bei einem solchen Parallelbetrieb der ersten Netzwerk-Slice 213 und der zweiten Netzwerk-Slice 215 kann beispielsweise auf Veranlassung des Anwenders/Besitzers der Basisstation 201 der Betrieb der zweiten Netzwerk-Slice 215 auf der Basisstation 201 beendet werden, indem die Zuordnung der Basisstation 201 zu der zweiten Netzwerk-Slice 215 aufgehoben wird.

In einer Ausführungsform kann der zweiten Netzwerk-Slice 215, d.h. dem zweiten logischen Subnetzwerk 215, des Kommunikationsnetzwerkes 200 ferner eine Datenbank 215b zugeordnet sein, auf welche die Basisstation 201 im Betrieb der zweiten Netzwerk-Slice 215 zugreifen kann und Identifikations-, Adress- oder Zugangsinformationen wenigstens eines Kommunikationsendgeräts des zweiten Satzes von Kommunikationsendgeräten 203b hinterlegt sind. Die Identifikations-, Adress- oder Zugangsinformationen können beispielsweise eine IMSI, IMEI, eID oder eUICC zur Identifizierung und/oder ein Passwort wenigstens eines Kommunikationsendgeräts des zweiten Satzes von Kommunikationsendgeräten 203b zur gegenseitigen Authentifizierung umfassen.

In einer Ausführungsform ist im Betrieb des ersten Subnetzwerkes 213 die Basisstation 201 durch einen ersten Zugangsschlüssel gesichert, insbesondere durch einen ersten Zugangsschlüssel, der dem Anwender/Besitzer der Basisstation 201 bekannt ist, und im Betrieb des zweiten Subnetzwerkes 215 die Basisstation 201 durch einen zweiten Zugangsschlüssel gesichert, insbesondere durch einen zweiten Zugangsschlüssel, der dem Betreiber des Zugangsnetzwerks 210 bekannt ist.

Wie vorstehend bereits erwähnt, kann das Umschalten von der ersten Netzwerk-Slice 213 (Default-Modus) auf die zweite Netzwerk-Slice 215 des Kommunikationsnetzwerkes 200 mittels der Managemententität 211 in Form eines SDN-Controllers vorzugsweise dann erfolgen, wenn der Anwender/Besitzer die Basisstation 201 nicht nutzt, z.B. nachts oder wenn der Anwender/Besitzer außer Haus ist. Es ist denkbar, dass hierzu dem Anwender/Besitzer eine Möglichkeit gegeben wird, z.B. mittels eins Webportals zu definieren, zu welchen Zeiten die Basisstation 201 nicht genutzt wird. Dem Anwender/Besitzer der Basisstation 201 könnte durch eine Reduzierung der Kosten für seinen Internetanschluss im Default-Modus (d.h. im Betrieb der Basisstation 201 als Teil der ersten Netzwerk-Slice 213) ein Anreiz für das Betreiben seiner Basisstation 201 als Teil der zweiten Netzwerk-Slice 215 gegeben werden. Gemäß einer anderen Ausführungsform könnte beispielsweise die Managemententität 211 ausgebildet sein, im Betrieb der ersten Netzwerk-Slice 213 die Datenrate(n) zu überwachen, mit der über die Basisstation 201 Daten aus dem Internet heruntergeladen bzw. hochgeladen werden, und automatisch ein Umschalten auf die zweite Netzwerk-Slice 215 oder ein Hinzuschalten der zweiten Netzwerk-Slice 215 zu der ersten Netzwerk-Slice 213 zu veranlassen, sobald über einen vordefinierten Zeitraum keine Daten über die Basisstation 201 als Teil der ersten Netzwerk-Slice 213 aus dem Internet heruntergeladen bzw. hochgeladen worden sind.

In einer Ausführungsform kann die Basisstation 201 ausgebildet sein, im Betrieb der ersten Netzwerk-Slice 213 des Kommunikationsnetzwerkes 200 einen ersten Drahtlosnetzwerkstandard zur Kommunikation mit den Kommunikationsendgeräten des ersten Satzes von Kommunikationsendgeräten 203a zu verwenden und im Betrieb des zweiten Netzwerk-Slices des Kommunikationsnetzwerkes 200 einen zweiten Drahtlosnetzwerkstandard zur Kommunikation mit den Kommunikationsendgeräten des zweiten Satzes von Kommunikationsendgeräten 203b zu verwenden. Beispielsweise kann die Basisstation 201 ausgebildet sein, im Betrieb der ersten Netzwerk-Slice 213 auf der Basis eines WiFi-Drahtlosnetzwerkstandards mit den Kommunikationsendgeräten des ersten Satzes von Kommunikationsendgeräten 203a zu kommunizieren und im Betrieb der zweiten Netzwerk-Slice 215 auf der Basis des ZigBee-Drahtlosnetzwerkstandards mit den Kommunikationsendgeräten des zweiten Satzes von Kommunikationsendgeräten 203b zu kommunizieren.

In einer Ausführungsform kann im Betrieb des ersten Subnetzwerkes 213 des Kommunikationsnetzwerkes 200 die Basisstation 201 eine andere Abstrahlcharakteristik als im Betrieb des zweiten Subnetzwerkes 215 des Kommunikationsnetzwerkes 200 aufweisen. Eine solche Ausführungsform kann besonders vorteilhaft bei einer Basisstation 201 eingesetzt werden, die beispielsweise mittels Beamforming-Techniken dazu in der Lage ist, richtungsabhängig mit den Kommunikationsendgeräten in der Umgebung der Basisstation 201 zu kommunizieren.

In einer Ausführungsform kann im Betrieb des ersten Subnetzwerkes 213 des Kommunikationsnetzwerkes 200 die Basisstation 201 eine andere Downlink-Datenkapazität oder Uplink-Datenkapazität als im Betrieb des zweiten Subnetzwerkes 215 des Kommunikationsnetzwerkes 200 aufweisen. Mit anderen Worten: in einer Ausführungsform kann die Basisstation 201 ausgebildet sein, im Betrieb des ersten Subnetzwerkes 213 des Kommunikationsnetzwerkes 200 den Kommunikationsendgeräten des ersten Satzes von Kommunikationsendgeräten 203a eine erste maximale Downlink-Datenkapazität und/oder Uplink-Datenkapazität zur Verfügung zu stellen und im Betrieb des zweiten Subnetzwerkes 215 des Kommunikationsnetzwerkes 200 den Kommunikationsendgeräten des zweiten Satzes von Kommunikationsendgeräten 203b eine zweite maximale Downlink-Datenkapazität und/oder Uplink-Datenkapazität zur Verfügung zu stellen. Diese Ausführungsform ermöglicht es, die von der Basisstation zur Verfügung gestellte Downlink- und Uplink-Datenkapazität an die in der ersten Netzwerk-Slice 213 und der zweiten Netzwerk-Slice 215 tatsächlich benötigten Datenkapazitäten anzupassen.

Wie vorstehend beschrieben, basieren Ausführungsform der Erfindung auf dem Grundgedanken unter Verwendung von Netzwerk-Slices zumindest einen Teil der über Mobilfunknetze anfallenden Kommunikation mit Endgeräten zumindest zweitweise auf die Vielzahl von WiFi-Netze auszulagern, die durch die bestehende Infrastruktur von privat genutzten WiFi-Basisstationen ausgebildet wird. Hierbei ist zu bedenken, dass der größte Teil der privat verwendeten Basisstationen in der Regel nicht ununterbrochen genutzt wird, sondern es längere "Ruhephasen" gibt (z.B. nachts, tagsüber, wenn der Privatanwender bei der Arbeit ist und/oder der Privatanwendet im Urlaub ist), während denen die Basisstation bzw. das entsprechende WiFi-Netzwerk nicht genutzt werden.

## Patentansprüche

1. Verfahren (100) zum Betreiben eines Kommunikationsnetzwerkes (200) mit einer Basisstation (201), wobei das Verfahren umfasst:
Zuordnen (101) der Basisstation (201) zu einem ersten Subnetzwerk (213) des Kommunikationsnetzwerkes (200) und Betreiben des ersten Subnetzwerkes (213) des Kommunikationsnetzwerkes (200) mittels einer Managemententität (211), wobei die Basisstation (201) ausgebildet ist, im Betrieb des ersten Subnetzwerkes (213) mit einem ersten Satz von Kommunikationsendgeräten (203a) zu kommunizieren; und
Zuordnen (103) der Basisstation (201) zu einem zweiten Subnetzwerk (215) des Kommunikationsnetzwerkes (200) und Betreiben des zweiten Subnetzwerkes (215) des Kommunikationsnetzwerkes (200) mittels der Managemententität (211), wobei die Basisstation (201) ausgebildet ist, im Betrieb des zweiten Subnetzwerkes (215) mit einem zweiten Satz von Kommunikationsendgeräten (203b) zu kommunizieren.

2. Verfahren (100) nach Anspruch 1, wobei zu einem Zeitpunkt entweder das erste Subnetzwerk (213) oder das zweite Subnetzwerk (215) des Kommunikationsnetzwerkes (200) betrieben wird.

3. Verfahren (100) nach Anspruch 2, wobei das Verfahren (100) ferner den Schritt des Umschaltens vom Betrieb des ersten Subnetzwerkes (213) des Kommunikationsnetzwerkes (200) auf den Betrieb des zweiten Subnetzwerks (215) des Kommunikationsnetzwerkes (200) umfasst, wobei der Schritt des Umschaltens mittels der Managemententität (211) durchgeführt wird.

4. Verfahren (100) nach Anspruch 1, wobei das erste Subnetzwerk (213) und das zweite Subnetzwerk (215) des Kommunikationsnetzwerkes (200) parallel betrieben werden.

5. Verfahren (100) nach einem der vorstehenden Ansprüche 1, wobei das Kommunikationsnetzwerk (200) ein Zugangsnetzwerk (210) umfasst, das im Betrieb des ersten Subnetzwerkes (213) dem ersten Satz von Kommunikationsendgeräten (203a) den Zugang zum Internet ermöglicht und im Betrieb des zweiten Subnetzwerkes (215) dem zweiten Satz von Kommunikationsendgräten (203b) den Zugang zum Internet ermöglicht.

6. Verfahren (100) nach einem der vorstehenden Ansprüche, wobei die Basisstation (201) als WLAN-Basisstation, insbesondere WiFi-Basisstation, ausgebildet ist.

7. Verfahren (100) nach einem der vorstehenden Ansprüche, wobei das erste Subnetzwerk (213) und das zweite Subnetzwerk (215) logisch voneinander entkoppelt sind.

8. Verfahren (100) nach einem der vorstehenden Ansprüche, wobei im Betrieb des ersten Subnetzwerkes (213) des Kommunikationsnetzwerkes (200) die Basisstation (201) einen ersten Drahtlosnetzwerkstandard zur Kommunikation mit dem ersten Satz von Kommunikationsendgeräten (203a) verwendet und wobei im Betrieb des zweiten Subnetzwerkes (215) des Kommunikationsnetzwerkes (200) die Basisstation (201) einen zweiten Drahtlosnetzwerkstandard zur Kommunikation mit dem zweiten Satz von Kommunikationsendgeräten (203b) verwendet.

9. Verfahren (100) nach einem der vorstehenden Ansprüche, wobei im Betrieb des ersten Subnetzwerkes (213) des Kommunikationsnetzwerkes (200) die Basisstation (201) eine andere Abstrahlcharakteristik als im Betrieb des zweiten Subnetzwerkes (215) des Kommunikationsnetzwerkes (200) aufweist.

10. Verfahren (100) nach einem der vorstehenden Ansprüche, wobei im Betrieb des ersten Subnetzwerkes (213) des Kommunikationsnetzwerkes (200) die Basisstation (201) eine andere Downlink-Datenkapazität oder Uplink-Datenkapazität als im Betrieb des zweiten Subnetzwerkes (215) des Kommunikationsnetzwerkes (200) aufweist.

11. Verfahren (100) nach einem der vorstehenden Ansprüche, wobei im Betrieb des zweiten Subnetzwerkes (215) des Kommunikationsnetzwerkes (200) die Basisstation (201) Zugriff auf eine Datenbank (215b) hat, die dem zweiten Subnetzwerk (215) zugeordnet ist, wobei in der Datenbank (215b) Identifikations-, Adress- oder Zugangsinformationen wenigstens eines Kommunikationsendgeräts des zweiten Satzes von Kommunikationsendgeräten (203b) hinterlegt sind.

12. Verfahren (100) nach einem der vorstehenden Ansprüche, wobei im Betrieb des ersten Subnetzwerkes (213) die Basisstation (201) durch einen ersten Zugangsschlüssel gesichert ist und im Betrieb des zweiten Subnetzwerkes (215) die Basisstation (201) durch einen zweiten Zugangsschlüssel gesichert ist.

13. Verfahren (100) nach einem der vorstehenden Ansprüche, wobei das erste Subnetzwerk (213) und das zweite Subnetzwerk (215) Slices des Kommunikationsnetzwerkes (200) sind.

14. Basisstation (201) für ein Kommunikationsnetzwerk (200), wobei die Basisstation ausgebildet ist, einem ersten Subnetzwerk (213) des Kommunikationsnetzwerkes (200) oder einem zweiten Subnetzwerk (215) des Kommunikationsnetzwerkes (200) zugeordnet zu werden, wobei und im Betrieb des zweiten Subnetzwerkes (215) mit einem zweiten Satz von Kommunikationsendgeräten (203b) zu kommunizieren.

15. Managemententität (211) zum Betreiben eines Kommunikationsnetzwerkes (200) mit einer Basisstation (201), wobei die Managemententität (211) ausgebildet ist, die Basisstation (201) einem ersten Subnetzwerk (213) des Kommunikationsnetzwerkes (200) zuzuordnen und das erste Subnetzwerk (213) des Kommunikationsnetzwerkes (200) zu betreiben, wobei die Basisstation (201) ausgebildet ist, im Betrieb des ersten Subnetzwerkes (213) mit einem ersten Satz von Kommunikationsendgeräten (203a) zu kommunizieren, und wobei die Managemententität (211) ausgebildet ist, die Basisstation (201) einem zweiten Subnetzwerk (215) des Kommunikationsnetzwerkes (200) zuzuordnen und das zweite Subnetzwerk (215) des Kommunikationsnetzwerkes (200) zu betreiben, wobei die Basisstation (201) ausgebildet ist, im Betrieb des zweiten Subnetzwerkes (215) mit einem zweiten Satz von Kommunikationsendgeräten (203b) zu kommunizieren.
